# EUROPEAN PATENT SPECIFICATION

(11) **EP 2 681 057 B1**
(45) Date of publication and mention of the grant of the patent: **15.04.2015**
(21) Application number: 12716209.7
(22) Date of filing: 29.02.2012
(51) Int. Cl.: B42D 15/00, G07D 7/20, G07D 7/00, B42D 25/00, B82Y 30/00, G06K 9/62

(54) **A NANOFIBRE TAG**
NANOFASERETIKETT
ÉTIQUETTE À NANOFIBRES

(30) Priority: 02.03.2011 EP 11156560
(43) Date of publication of application: 08.01.2014
(73) Proprietor: Nanorig A/S, 9220 Aalborg Øst (DK)
(72) Inventor: RUBAHN, Horst-Günter, 24983 Handewitt (DE); JOHANSEN, Stefan, DK-6400 Sønderborg (DK); RADZIWON, Michal, DK-6400 Sønderborg (DK)
(74) Representative: Plougmann & Vingtoft A/S
(86) International application number: PCT/DK2012/050065
(87) International publication number: WO 2012/116701

(56) References cited:
- WO-A2-2010/120531
- US-A1- 2009 074 231
- US-A1- 2010 050 901

## Description

### FIELD OF THE INVENTION

The present invention relates to the field of anti-counterfeit products. In particular, the invention is related to anti-counterfeiting tags having unique nanofibre patterns.

### BACKGROUND OF THE INVENTION

Counterfeiting is a worldwide common problem. Consumers are negatively affected by the influx of counterfeit items into the market as this increases the risk of purchasing faulty or poor quality products in place of legitimate ones. Producers are equally negatively affected by the influx of counterfeit items as counterfeited items cause losses in their revenues. Generally counterfeited items are present in any segments of consumer markets from clothing to documents and from furniture to currency.

To counteract this problem, anti-counterfeiting technology is constantly being developed and improved. This technology aims at the unique identification of an authentic item in a way that is very difficult, and hopefully impossible, to reproduce.

In deterring counterfeiting different approaches have been used to avoid, e.g. currency counterfeiting. For example, specific areas of currency notes have been designed in a complicated way so as to avoid counterfeiting.

Several different solutions are used for anti-counterfeiting measures today depending on the product to protect from forgery.

For example these are: identification such as "watermarks" embedded in bank notes or important documents; embossed logos/serial numbers embedded in different products; holographic strips/foils embedded in or attached to the surface of paper based products; RFID-tags embedded in goods.

However, these approaches have been subject of reproduction, e.g. copying of anti-counterfeiting measures such as holograms embedded into products of well-known brand names.

US 2010/0050901 discloses the use of nano, micro or bulk particles incorporated into a matrix to form a taggant. The taggant is designed in such a way that various structures in the matrix may be or may not be detectable by human eye. For example nano, micro or bulk particles may be dispersed into a carrier and then mixed into a polymer producing either an ink solution or a nano-composite polymer layer which can be sprayed or attached onto the surface of the product to be tagged.

US 2009/0074231 discloses a security article where a substrate comprises identifying elements such as luminescent fibres randomly scattered on the substrate.

However, also the use of these anti-counterfeiting technologies has the drawback that these tags can be reproduced. For example, by applying the same conditions of deposition of these particles or fibres, employing, e.g. the same coating parameters, similar tags can be reproduced.

Due to this challenge, new and better anti-counterfeiting technology is constantly in demand. Specifically, there is a need in the art for anti-counterfeiting technology that is very difficult for counterfeiters to duplicate.

Hence, an improved anti-counterfeiting tag and method to produce it would be advantageous, and in particular a more efficient and/or reliable way to produce a unique anti-counterfeiting tag would be advantageous.

### OBJECT OF THE INVENTION

It may be seen as an object of this invention to produce anti-counterfeiting tags which are individually unique.

It may be also seen as an object of this invention to produce anti-counterfeiting tags which are inimitable, i.e. not reproducible.

It may also seen as an object of this invention to produce anti-counterfeiting tags that are less expensive, complex and time consuming to produce than the one of the prior art.

It is a further object of the present invention to provide an alternative to the prior art.

In particular, it may be seen as an object of the present invention to provide a nanofibre tag that solves the above mentioned problems of the prior art by providing an anti-counterfeiting product which cannot be reproduced.

### SUMMARY OF THE INVENTION

The invention aims at the production of easy identifiable structures in the nanoscale range which are very hard if not impossible to be copied by any means.

The basic idea of the invention is to produce a tag which is characterized by a unique pattern of nanofibres which are grown randomly at the edge of or underneath a masking means, so that by producing a clearly identifiable pattern of nanofibres, generally separated from each other, a unique not reproducible nanofibre pattern is created to be used for anti-counterfeiting purposes.

Thus, the above described object and several other objects are intended to be obtained in a first aspect of the invention by providing a method for producing a tag product, the method comprising: growing nanofibres on a surface of a substrate in presence of means for confining nanofibre growth within a desired area; wherein the means for confining nanofibre growth is adapted to allow at least partial growth on areas of the surface of the substrate at a boundary of and/or at least partially underneath the means for confining nanofibre growth.

In this way a unique nanofibre fingerprint is created at the boundary or in the area on the substrate underneath the growth confinement means during the nanofibre growth. The formation of the fingerprint is governed by random molecular growth.

The previously described object and several other objects are intended to be obtained in a second aspect of the invention by providing a tag product for anti-counterfeit purposes comprising: a substrate; one or more nanofibres grown on one or more areas of the substrate, wherein the one or more areas comprises at least one area where nanofibres are present at a lower concentration than in other areas, and wherein at least one boundary, between the at least one area where nanofibres are present at a lower concentration than other areas and the other areas, is a boundary clearly identifiable by imaging means.

A tag, also referred herein as nano-tag, is defined as an element providing information regarding the member to which the tag is linked to.

Clearly identifiable is defined herein as a well defined, clear cut boundary which distinguishes the different areas where growth occurred at different concentration. This sharp boundary is caused by the nanofibres growth confinement technique used for growing the nanofibres. In that a concentration gradient within an area of growth of nanofibres is not to be considered as defining two different areas. The area at low concentration and the area at high concentration are clearly defined as two separate areas and cannot be identified for the purpose of this application as an area where a concentration gradient of nanofibres is present.

Clearly identifiable is also related to the fact that the areas where nanofibres have been grown at a low concentration generally shows single or small bundles of nanofibres which by being separated from each other can be easily identified by imaging means.

Lower concentration and higher concentration have been herein used as relative terms referring to the areas of the substrate where the nanofibres have been grown. These terms will further become apparent from and elucidated with reference to the embodiments described hereinafter.

Imaging means, according to any one of the aspects of the invention, may be any device or system having the ability of obtaining an optical image of the region of interest, i.e. the boundary area on the substrate between the lower and higher concentration areas. These imaging means may be in the field of microscopy, for example an optical microscope, a fluorescence microscope, a Scanning Electron Microscope (S.E.M.) or an interference microscope. The region of interest for the imaging means is indeed the area at the boundary between areas at different concentration as at the boundary the identification of the unique pattern of the nanofibres is easier to be distinguished. Identification may be achieved by means, e.g. of dark field microscopy.

The boundary may be clearly identifiable by imaging means at a magnification in the range between ten to one hundred times, i.e. 10X and 100X.

In some embodiments, according to any one of the aspects of the invention, this region of interest may be within 150-250 µm from the boundary towards the area with a lower concentration of nanofibres, i.e. the area located underneath the growth confinement means during the growing process.

Within 150-250 µm is defined as within a radius of 150 µm or 250µm from the boundary towards the mentioned direction. Unless stated otherwise the word within implies an area from the mentioned boundary to the mentioned limit.

In some embodiments, according to any one of the aspects of the invention, this region of interest may be between 250 µm from the boundary into the area with a lower concentration of nanofibres to 250 µm from the boundary into the area with a higher concentration of nanofibres, i.e. the area located underneath the openings of the means of growth confinement during the growing process.

Indeed, the one or more nanofibres grown on one or more areas of the substrate are grown using a nanofibres growth confinement technique.

In some embodiments the nanofibres growth confinement technique is a masking technique. In this the growth of nanofibres on the surface of the substrate underneath the mask comprises an area of said surface within 250 µm from the boundary of the said means for confining nanofibres growth in the direction towards the masked area.

The one or more nanofibres may be also read as one or more type of nanofibres.

The one or more nanofibres used may be different nanofibres or nanofibres of the same kind.

Nanofibres may be formed from any molecular structure having the ability to form such fibres under controlled circumstances, and could for example be grown from *p*-phenylene such as p-6P (*para*-hexaphenylene), PPTPP (2,5-Di-4-biphenyl-thiophene) or other oligomers.

In some embodiments according to the any aspect of the invention the one or more areas comprises at least one area where nanofibres are not present. Indeed the one or more areas may comprise areas where nanofibres are grown in a higher concentration, areas where nanofibres are grown in a lower concentration and areas where nanofibre growth is absent.

In some embodiments a tag product according to the any aspect of the invention further comprise means for linking the tag product to a member.

A member may be a product to be tagged for anti-counterfeiting purposes. For example a member may be an electronic device, a document or a bank note.

The tags may be flexible and can be linked to different products surfaces with no need of prior treatments.

In some embodiments the means for linking the tag product to a member comprises an adhesive element in contact with the support and in contact with the one or more areas of the substrate where one or more nanofibres have been grown.

For example, the adhesive element may be an adhesive tape having the adhesive side in contact with the substrate and the nanofibres, producing a rigid and compact tag that can be easily linked to product to be tagged. By using an adhesive tape having dimensions extending over the ones of the substrate, the surface of the adhesive tape having adhesive properties is further available for bonding with the product to be tagged. In some embodiments the adhesive tape may have two adhesive surfaces.

In some embodiments the one or more nanofibres have luminescent properties.

For example, the nanofibres used may be *Para*-hexaphenyl (p-6p) which has an intense luminescence in a particular region of the UV/Vis spectrum, i.e. blue emission. The use of luminescent nanofibres may have the advantage that the boundary between areas at different concentrations may be clearly identifiable by illuminating the region of interest with a light at a specific wavelength, e.g. a UV light. The spectroscopy of the light emitted from the nanofibres under UV illumination is an extra means for identifying the molecular composition of the fibres.

It may be noticed that a further advantage of the use UV-light for detecting the nanofibres is that low cost sources of UV-light are available therefore resulting in a low-cost apparatus for identification of the nano-tag.

It may be also noticed that a further advantage of the invention is that the cost-price of producing the individual tag is very low since the amount of material used is very limited, e.g. ultrathin discontinuous nanofibre films of average thickness less than 20 nm.

In some embodiments the nanofibres are grown via a molecular beam epitaxy process through means for confining nanofibre growth.

The nanofibre growth confinement technique has the advantage of providing a microscopic tag having an area towards which an imaging device should be directed and focused so as to locate the nanofibre tag.

Therefore the use of growth confinement means has the advantage of providing a tag having a tagging function at two levels: a microscopic level so as to identify where the imaging device should be focused, and at nanoscopic level, i.e. the nano-tag in itself. At the microscopic level the structure of the means for growth confinement produces a specific complementary structure on the substrate following the growth of the nanofibres, e.g. a crossed shape structure or a sharp boundary. This can be used to identify the area where nanofibres are present so as to focus the imaging device. At the nanoscopic level the nanofibres grown at the boundary of and/or underneath said means for confining nanofibre growth produces a unique, not reproducible nanofibre pattern which represents the fingerprint of the tag. In that the presence of means for growth confinement is necessary so as to create the environment for growing the nanofibre fingerprint and not for creating the fingerprint in itself, i.e. the specific complementary structure on the substrate is not the fingerprint.

Thus in a third aspect, the invention provides a tag product for anti-counterfeit purposes comprising: a substrate; one or more nanofibres grown on one or more areas of the substrate, wherein the one or more areas comprises at least one area where nanofibres are present at a lower concentration than other areas, and wherein at least one boundary, between the at least one area where nanofibres are present at a lower concentration than other areas and the other areas, delimits a macroscopic and a nanoscopic identification of the tag product wherein the at least one boundary defines the macroscopic identification of the tag product, and the nanofibres grown at the at least one boundary define the nanoscopic identification of the tag product.

The at least one boundary is created by nanofibres growth confinement means.

In some embodiments according to the third aspect of the invention the at least one boundary is clearly identifiable by imaging means. For example, the imaging means may also be in the field of microscopy.

In some other embodiments according to the third aspect of the invention the at least one boundary is clearly identifiable by imaging means at a magnification in the range between 10X and 100X.

In general means for confining nanofibre growth may be any means that can at least partially discriminate the nanofibre growth on a surface, i.e. can induce a spatial difference in the concentration of the nanofibres grown at the surface of a substrate. Examples of this means may be wire structures of different materials, solid masks, chemically removable thin film masks applied using lithographic methods etc.

Means for confining the growth may also be any elements which can be superimposed, i.e. laid over, a surface of a substrate so as to reduce the growth on the masked surface.

In some embodiments according to the first aspect of the invention the means for confining nanofibre growth is a shadow mask.

In some embodiments according to the first aspect of the invention the means for confining nanofibre growth is provided at the surface of said substrate. At the surface is herein defined as in contact with the surface, i.e. a surface of the means for confining nanofibres growth is in contact with a surface of the substrate.

In some embodiments according to the first aspect of the invention the means for confining nanofibres growth is provided between 0 to 500 nm from the surface of the substrate. In some other embodiments the means for confining nanofibres growth may be provided between 50 to 400 nm from the surface of the substrate. In some other embodiments the means for confining nanofibres growth may be provided between 100 to 300 nm from the surface of the substrate.

In some embodiments the method according to the first aspect of the invention further comprises: removing the means for confining nanofibres growth, thereby exposing the nanofibres grown on areas of the surface of the substrate at the boundary of and/or at least partially underneath the means for confining nanofibre growth; identifying by imaging means the nanofibre growth at the boundary of and/or at least partially underneath the means for confining nanofibre growth.

In some embodiments the method according to the first aspect of the invention further comprises extracting image data from images of the nanofibres grown within the boundary area.

By shaping the shadow mask in such a way that a particular point on the surface of the tag can always be found in a low magnification microscopic image of the surface, the unique fingerprint at this point can be detected and extracted by automated software. This fingerprint may be stored in a database coupled to information on the particular tag e.g. a serial number or a production date. When a product is marked with a tag, it can always be determined whether it is genuine by taking a microscopic photograph of the tag, using handheld equipment, and extracting the fingerprint data to compare it with that already existing in the database.

The link between the data extracted from the imaging of the fingerprint and the fingerprint provides a unique way for identification of the product to which the nanofibres tag has been bound.

In some embodiments according to the first aspect of the invention the extracting of image data comprises using an algorithm.

In some embodiments the method according to the first aspect of the invention further comprises removing the nanofibres by cleaving at least part of the surface of the substrate.

In some other embodiments the removing comprises: applying adhesive means to the nanofibres grown on said surface of said substrate; removing the adhesive means, thereby cleaving at least part of the surface of the substrate comprising at least part of the nanofibres grown on areas of the surface of the substrate at the boundary of and/or at least partially underneath the means for confining nanofibre growth.

In further embodiments the growth of nanofibres may further comprise applying a degree of pressure onto the means for confining nanofibre growth so as to allow at least partial nanofibre growth on the surface area of the substrate located underneath said means for confining nanofibre growth.

In some embodiments of the invention a tag product according to the second and third aspect of the invention is produced according to the method of the first aspect of the invention.

In a further aspect of the invention a method for tagging a member for anti-counterfeiting purposes is provided. The method comprises: producing a database of image data extracted from tag products according to the second or third aspect of the invention; applying the tag products to members; identifying the members by comparing the image data from tags present on the members.

The first, second and further aspects are relative embodiments of the present invention may each be combined with any of the other aspects and embodiments. These and other aspects of the invention will be apparent from and elucidated with reference to the embodiments described hereinafter.

### BRIEF DESCRIPTION OF THE FIGURES

The tag product and method according to the invention will now be described in more detail with regard to the accompanying figures. The figures show one way of implementing the present invention and is not to be construed as being limiting to other possible embodiments falling within the scope of the attached claim set.
Figure 1 is a schematic drawing of a support with substrate.
Figure 2 is a schematic drawing of a shadow mask.
Figure 3 is a schematic drawing of a support with substrates after the nanofibres growth.
Figure 4 is a schematic drawing of a magnification of a substrate after the nanofibres growth.
Figure 5 is a schematic cross-sectional drawing of a substrate after the nanofibres growth including an adhesive tape.
Figure 6 is a schematic cross-sectional drawing of a tag product according to some embodiments of the invention.
Figure 7 is a microscopic image of a tag product according to some embodiments of the invention.
Figure 8 is a flow chart for a method according to one aspect of the invention.

### DETAILED DESCRIPTION OF AN EMBODIMENT

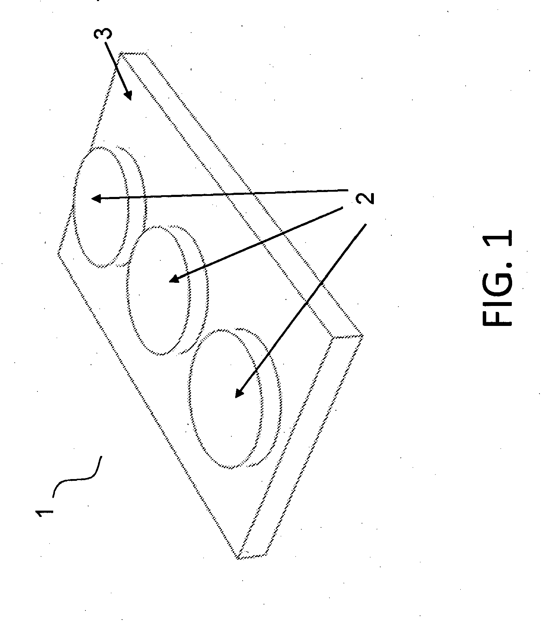

Figure 1 is a schematic drawing of a support with substrates. In figure 1 a support structure 1 is shown including substrates 2, such as mica crystals located onto a surface of the support 3.

Generally commercially available mica discs may be previously treated so as to obtain a clean surface. For example mica discs 2 may be cleaved in air using adhesive tape. In the growing process the cleaved mica is transferred into a vacuum chamber and heated while the base pressure, e.g. in the area between 3 and 5 x 10⁻⁵ Pa; is achieved through pumping. It may require some time to achieve the final pressure and sample temperature, e.g. between 2 to 5 hrs.

The surface temperature of the mica discs may not be precisely monitored, however the temperature of the support 3 acting as a sample holder is kept within a desired temperature, e.g. between 500 and 600 K.

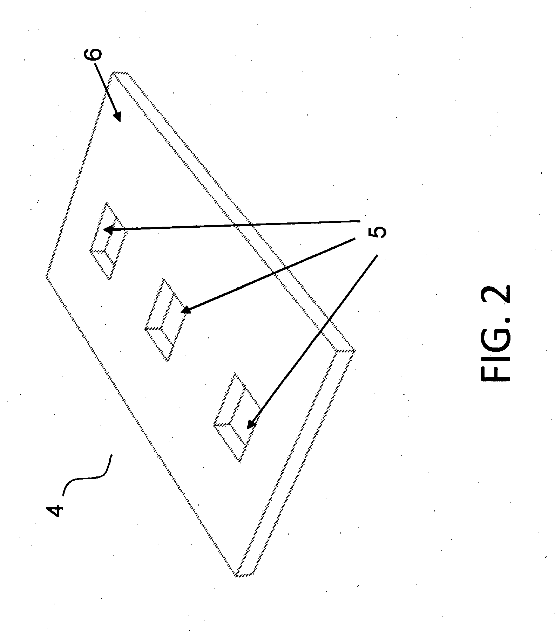

Figure 2 is a schematic drawing of a shadow mask.

The shadow mask 4 has openings 5 on its surface extending from the top surface of the mask 6 through all its thickness so as to produce windows in the mask 4 of desired dimensions, e.g. 1 mm² or higher.

The optimal size of the openings 5 may be dependent on the growing technique used and/or the thickness of the mask as well as on the desired dimensions of the surface of the substrate to be covered by nanofibres.

Once the shadow mask 4 is located onto the substrates 2 it defines an unshadowed area on the substrates 2 where growth in high concentration of nanofibres is allowed.

The shadow mask may be a block of material where holes have been produced, e.g. by LASER cutting technique. In some embodiments the shadow mask may be a thin wire of steel, e.g. between 0.1 to 0.5 mm of cross section.

In some embodiments the shadow mask may be a grid made of steel wire having a suitable diameter, e.g. between 0.1 to 1 mm, such as between 0.2 and 0.6 mm.

In some embodiments the shadow mask is in contact with the surface of the substrate.

In some other embodiments the shadow mask is pressed in contact with surface of the substrate to a degree which allows at least partial nanofibres growth on the surface area of the substrate located underneath the mask.

In some embodiments the shadow mask is pressed in contact with surface of the substrate by means of nuts and bolts located onto the shadow mask and onto the support.

In some embodiments the surface of the shadow mask in contact with the substrate may have a surface roughness which induces nanofibre growth onto the surface area of the substrate located underneath the shadow mask.

In some embodiments the shadow mask may have a geometrical structure so as to induce nanofibre growth onto the surface area of the substrate located underneath the shadow mask.

For example, the surface of the shadow mask facing the substrate may have an inclination so that part of the surface of the shadow mask towards the substrate is not in contact with the surface of the substrate when superimposed.

In some other embodiments the surface of the shadow mask facing the substrate may have a grove structure so that part of the surface of the shadow mask towards the substrate is not in contact with the surface of the substrate when superimposed.

The structure shadow mask/substrate/support may be very rigid and good contact between support substrate and at least part of the shadow mask surface ensures uniform temperature distribution throughout the deposition process.

In some embodiments the means for confining nanofibre growth may have easy recognizable microscopic structures.

One of the advantages of using means for confining nanofibres growth having easy recognizable microscopic structures is that the microscopic structure can be used for easy identification of the location of the nano-tag, i.e. the fingerprint.

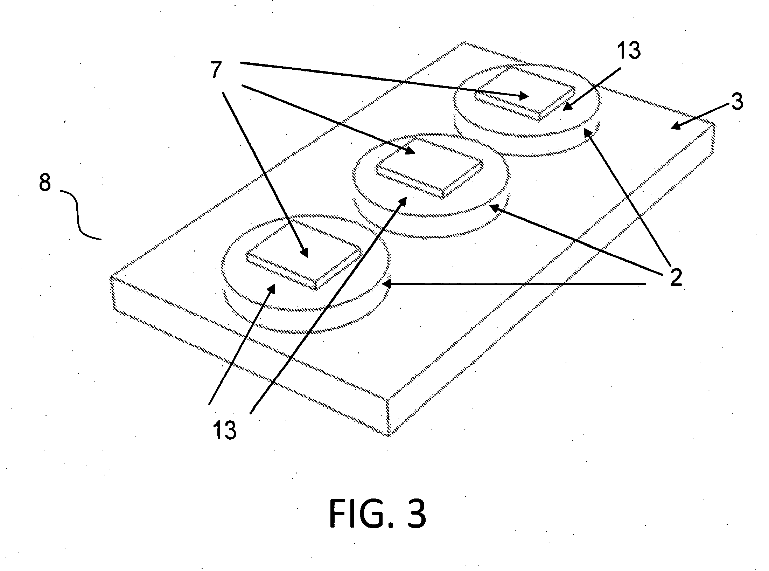

Figure 3 is a schematic drawing of a support with substrates after the nanofibres growth. Figure 3 shows the support structure 8 after the nanofibres growth process. Each substrates 2, located onto the support 3 shows on one of their surfaces 13 an area 7 where nanofibres have been grown. The dimensions and shapes of the areas 7 are determined by the dimensions and shapes of the openings 5 of the shadow mask 4 as the growth has been carried out, e.g. by guiding a molecular beam towards the mica surface. The nanofibres grown in area 7 form a layer of uniform thickness across the surface. This thickness may be controlled by varying the deposition rate and exposure time of the molecular beam. Areas 7 may be seen as the areas of the substrate where the nanofibres are induced to grow at a higher concentration than the other areas of the substrate. The nanofibres growing parallel to the surface of the substrate are allowed to grow into a thicker film in the area left open by the openings of the mask.

As mentioned nanofibre growth may be achieved through molecular beam epitaxial growth techniques.

Molecular beam epitaxial growth is generally carried out in high vacuum or ultra high vacuum (10⁻⁸ Pa) conditions. The biggest advantage of this technique is that films of materials like inorganic or organic semiconductor are allowed to grow epitaxially due to the slow deposition rate (typically less than 1 µm per hr).

In this the specific process of growth of nanofibres comprises sublimation of purified polymer material in vacuum at temperature in range between 650-665 K and at a pressure between 3 and 5 x 10⁻⁵ Pa. Operational parameters of molecular beam system are within the person skilled in the art.

The growth of the nanofibres is achieved in an evaporator system comprising a crucible, heating filaments, water cooling system and heat shields, e.g. a Knudsen Cell.

The source of polymer material is heated until it begins to slowly sublimate.

In some embodiments heating may comprise infrared heating. The gaseous elements then condense on the substrate. The term "beam" is actually an indication that evaporated molecules do not interact with each other or vacuum chamber gases until they reach the substrate.

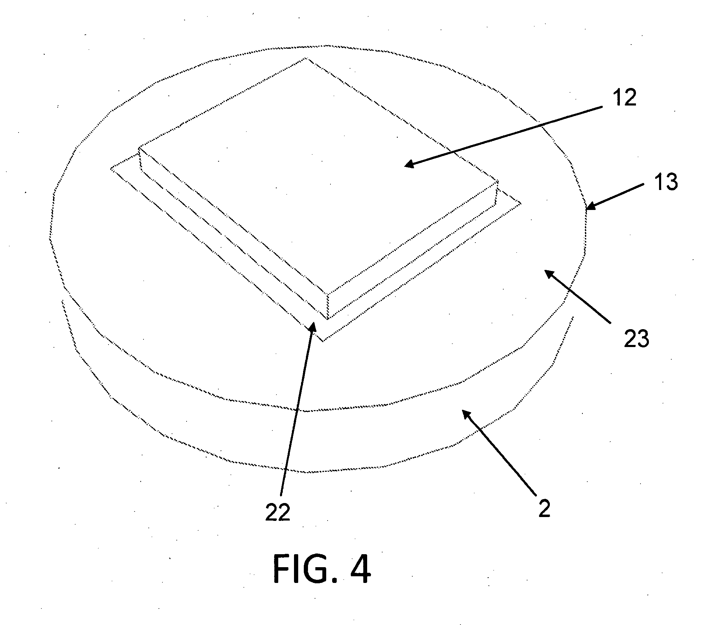

Figure 4 is a schematic drawing of a magnification of the substrate 2 after being exposed to the nanofibres growth. On the surface 13 of the substrate 2, three areas may be identified. Area 12 is the surface where the nanofibres have been grown at the higher concentration due to the opening 5 on the mask 4. Area 22 includes the boundary area of the projection of the opening 5 of the mask 4 onto the surface 13 and part of the area of the surface 13 located underneath the mask 4 where the nanofibres have been grown at a lower concentration than the area 12. Area 23 is the remaining area of the surface 13 being covered by the mask 4 during the growing process and where nanofibres are not present.

The area 22 corresponds to the area that identifies the fingerprint of the tag product having a clearly recognizable pattern as the concentration of the nanofibres is low. This allows for recognition of the unique spatial configuration, e.g. x/y pattern of the nanofibres therein grown. In some other embodiments other parameters which can uniquely identify the nanofibres fingerprint may be the size, structure, amount, length or shape of the nanofibres. In some other embodiments their luminescence may be the property which can be considered as the unique parameter characterizing the specific nanofibre fingerprint.

Other properties of the nanofibres may be used to identify the unique fingerprint.

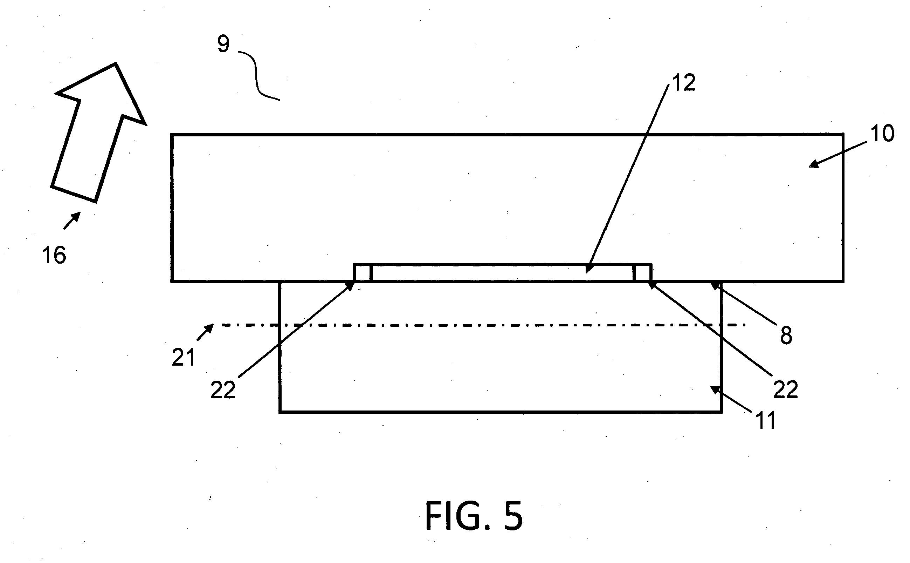

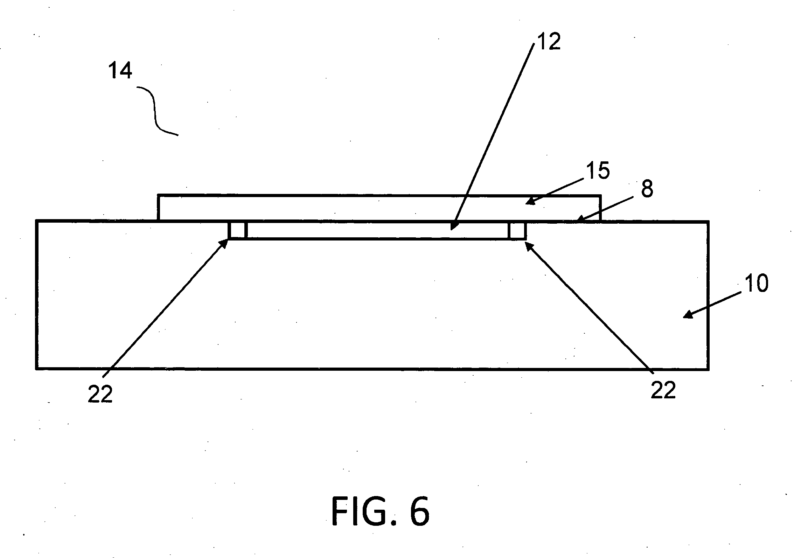

Figure 5 is a schematic cross-sectional drawing of a substrate after the nanofibres growth including an adhesive tape. In figure 5, on the substrate 11 an area 12 at high concentration of nanofibres may be identified. In order to create the tag product an adhesive tape 10 is put in contact with the surface 8 of the substrate 11 and with the nanofibres area 12 and 22. By pulling the adhesive tape following arrow 16 a tag product 14 is created as shown in figure 6. Due to its properties the substrate, such as a mica crystal, is cleaved, for example along line 21, through the application and subsequent removal of the adhesive tape 10.

Figure 6 is a schematic cross-sectional drawing of a tag product according to some embodiments of the invention. The tag product 14 has a nanofibres layer 12 deposited onto a substrate such as mica, which was cleaved so that a layer of mica 15 is included in the tag product, providing support for the nanofibres. The adhesive tape 10 has also the function of fixing the nanofibres structures between the adhesive tape and the mica layer 15. In the area 22, the nanofibres have a lower concentration than in area 12 and they are not a compact film but rather single or bundles of nanofibres being separated from each other. This has the advantage that a clear identification of the unique pattern of the nanofibres on part of the area covered by the mask is possible.

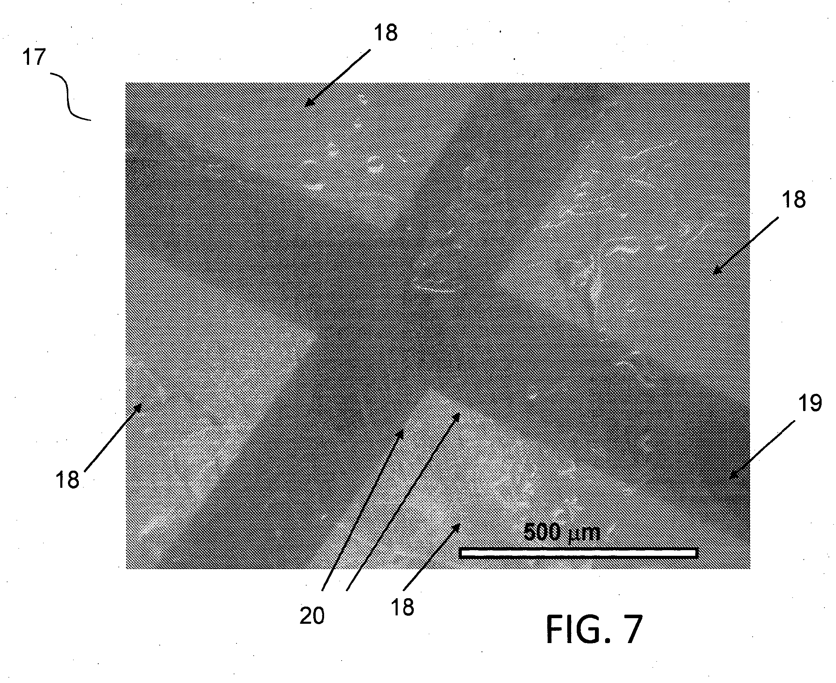

Figure 7 is a microscopic image of a tag product 17 according to some embodiments of the invention. In this embodiment the mask used had a crossed shape structure. The corresponding area 19 on the mica substrate, which were covered by the mask are shown darker than the area 18 which were not covered by the mask during the growing process. This is due the luminescent characteristics of the nanofibres used for in this embodiment, i.e. *p*-6P. Therefore bright areas, e.g. areas 18, correspond to areas where a thick layer of p-6P has been grown by a molecular beam epitaxial process due to the absence of masking means. The area 19 has a crossed shape due to the mask used. Once removed, the mask leaves underneath an area where nanofibres have been grown in a lower concentration than in area 18. It can be easily seen that nanofibres 20 are growing also in the area 19 and due to the high contrast between the area at high concentration and the area at low concentration a clear and unique pattern of nanofibres can be easily identified.

The nanofibres 20 may be the nanofibres providing the fingerprint of the tag product 17.

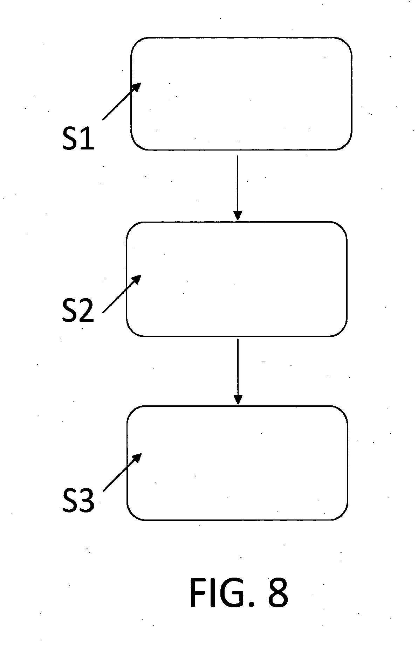

Figure 8 is a flow chart for a method according to one of the embodiments of the invention.

A method for producing a tag product, (comprising a unique nanofibre pattern), comprises: growing nanofibres on a surface of a substrate in presence of means for confining nanofibre growth within a desired area (S1); removing said means for space confinement, thereby exposing said nanofibres grown at the boundary of and/or underneath said means for confining nanofibres growth (S2); identifying the presence of nanofibres growth within said boundary area by imaging means (S3).

In some embodiments the method further comprises: extracting image data from the imaging of said nanofibres grown within said boundary area (not shown).

By way of example only a process for growing nanofibres according to one aspect of the invention is herein described.

### Example 1

*Para*-hexaphenyl (p-6P) fibres have been grown on muscovite mica discs in high vacuum (base pressure *p* ≈ 3.9 x 10⁻⁵ Pa) in a single-chamber vacuum system. The mica discs were cleaved in air using adhesive tape and immediately transferred into the vacuum chamber and heated whilst the base pressure was achieved through pumping. The final pressure and sample temperature was achieved within 3 hours. The surface temperature of the mica discs are not known precisely, but the temperature of the sample holder was kept at ≈ 568 K.

Mica discs were placed on a sample holder made from a plate of stainless steel. They were kept in place either covered by a shadow mask with laser-cut holes, or by a thin steel wire (0.3 mm gauge). To the shadow mask pressure means were applied so as to keep it pressed against the surface of the sample holder. The resulting "sandwich" structure was very rigid and provided uniform temperature distribution throughout the deposition process.

P-6P was kept in vacuum at a temperature of 573 K for several hours for purification before depositing the first organic films or fibres. Deposition of p-6P took place by sublimation from a homemade Knudsen cell at temperatures around 650-665 K and at a pressure of *p* ≈ 3.9 x 10⁻⁵ Pa. The deposited mass thickness was measured by a water-cooled quartz microbalance, positioned close to the sample holder.

Deposition rates have been less than or up to 0.1 Å s⁻¹.

Although the present invention has been described in connection with the specified embodiments, it should not be construed as being in any way limited to the presented examples. The scope of the present invention is set out by the accompanying claim set. In the context of the claims, the terms "comprising" or "comprises" do not exclude other possible elements or steps. Also, the mentioning of references such as "a" or "an" etc. should not be construed as excluding a plurality. The use of reference signs in the claims with respect to elements indicated in the figures shall also not be construed as limiting the scope of the invention. Furthermore, individual features mentioned in different claims, may possibly be advantageously combined, and the mentioning of these features in different claims does not exclude that a combination of features is not possible and advantageous.

## Claims

1. A tag product (14) for anti-counterfeit purposes comprising:
- a substrate (2);
- one or more nanofibres grown on one or more areas of said substrate,
wherein said one or more areas comprises at least one area (22) where nanofibres are present at a lower concentration than other areas (12), and
wherein at least one boundary, between said at least one area (22) where nanofibres are present at a lower concentration than other areas and said other areas (12), delimits a macroscopic and a nanoscopic identification of said tag product wherein said at least one boundary defines said macroscopic identification of said tag product, and said nanofibres grown at said at least one boundary define said nanoscopic identification of said tag product.

2. A tag product (14) for anti-counterfeit purposes according to claim 1 wherein said at least one boundary is clearly identifiable by imaging means.

3. A tag product (14) for anti-counterfeit purposes according to claim 2 wherein said boundary is clearly identifiable by microscopy.

4. A tag product (14) for anti-counterfeit purposes according to claims 2-3 wherein said boundary is clearly identifiable by imaging means having the ability of obtaining an optical image of the boundary area on said substrate between said at least one area (22) where nanofibres are present at a lower concentration than other areas and said other areas (12).

5. A tag product (14) for anti-counterfeit purposes according to claim 4 wherein said boundary area is within 150-250 µm from said at least one boundary towards said at least one area (22) where nanofibres are present at a lower concentration than other areas.

6. A tag product (14) for anti-counterfeit purposes according to claims 4-5 wherein said boundary area is between 250 µm from said at least one boundary into said at least one area (22) where nanofibres are present at a lower concentration than other areas, to 250 µm from said at least one boundary into said other areas (12).

7. A tag product (14) for anti-counterfeit purposes according to any of the preceding claims wherein said boundary is clearly identifiable by imaging means at a magnification in the range between 10X and 100X.

8. A tag product (14) according to any of the preceding claims further comprising:
- means for linking said tag product to a member.

9. A tag product (14) according to claim 8 wherein said means for linking said tag product to a member comprises an adhesive element (10) in contact with said support and in contact with said one or more areas of said substrate where one or more nanofibres have been grown.

10. A tag product according to any of the preceding claims wherein said one or more nanofibres have luminescent properties.

11. A method for producing a tag product according to any of the preceding claims, the method comprising:
- growing nanofibres on a surface of a substrate in presence of means for confining nanofibre growth within a desired area;
wherein said means for confining nanofibre growth is adapted to allow at least partial growth on areas of said surface of said substrate at a boundary with and/or underneath said means for confining nanofibre growth.

12. The method according to claim 11 further comprising:
- removing said means for confining nanofibre growth, thereby exposing said nanofibres grown on areas of said surface of said substrate at the boundary of and/or underneath said means for confining nanofibre growth;
- identifying by imaging means said nanofibre growth at said boundary with and/or underneath said means for confining nanofibre growth.

13. The method according to claim 12 further comprising:
- extracting image data from images of said nanofibres grown within said boundary area.

14. The method according to any of the preceding claims 11-13 further comprising:
- removing said nanofibres by cleaving at least part of said surface of said substrate.

15. A method for tagging a member for anti-counterfeiting purposes, the method comprising :
- Providing at least one tag Product according to any of claims 1-10;
- producing a database of image data extracted from said tag products
- apply said tag products to members;
- identifying said members by comparing said image data from said database with image data from tags present on said members.

## Patentansprüche

1. Markierungsprodukt (14) für Fälschungsschutzzwecke, umfassend:
- einen Träger (2);
- eine oder mehrere Nanofasern, die auf einem oder mehreren Bereichen des Trägers gezüchtet sind,
wobei der eine oder die mehreren Bereiche mindestens einen Bereich (22) umfassen, auf dem Nanofasern in einer geringeren Dichte als den anderen Bereichen (12) vorhanden sind, und
wobei mindestens eine Grenze zwischen dem mindestens einen Bereich (22), auf dem Nanofasern in einer geringeren Dichte als den anderen Bereichen vorhanden sind, und den anderen Bereichen (12) eine makroskopische und eine nanoskopische Identifikation des Markierungsprodukts begrenzt, wobei die mindestens eine Grenze die makroskopische Identifikation des Markierungsprodukts festlegt und die an der mindestens einen Grenze gezüchteten Nanofasern die nanoskopische Identifikation des Markierungsprodukts festlegen.

2. Markierungsprodukt (14) für Fälschungsschutzzwecke nach Anspruch 1, wobei die mindestens eine Grenze durch bildgebende Mittel eindeutig identifizierbar ist.

3. Markierungsprodukt (14) für Fälschungsschutzzwecke nach Anspruch 2, wobei die mindestens eine Grenze mittels Mikroskopie eindeutig identifizierbar ist.

4. Markierungsprodukt (14) für Fälschungsschutzzwecke nach Anspruch 2-3, wobei die Grenze durch bildgebende Mittel eindeutig identifizierbar ist, mit denen ein optisches Bild des Grenzbereichs auf dem Träger zwischen dem mindestens einen Bereich (22), auf dem Nanofasern in einer geringeren Dichte als den anderen Bereichen vorhanden sind, und den anderen Bereichen (12) erhältlich ist.

5. Markierungsprodukt (14) für Fälschungsschutzzwecke nach Anspruch 4, wobei der Grenzbereich innerhalb von 150-250 µm von der mindestens einen Grenze in Richtung des mindestens einen Bereichs (22), auf dem Nanofasern in einer geringeren Dichte als den anderen Bereichen vorhanden sind, liegt.

6. Markierungsprodukt (14) für Fälschungsschutzzwecke nach Anspruch 4-5, wobei der Grenzbereich innerhalb von 250 µm von der mindestens einen Grenze in den mindestens einen Bereich (22), auf dem Nanofasern in einer geringeren Dichte als den anderen Bereichen vorhanden sind, bis 250 µm von der mindestens einen Grenze in die anderen Bereiche (12) liegt.

7. Markierungsprodukt (14) für Fälschungsschutzzwecke nach einem der vorhergehenden Ansprüche, wobei die Grenze durch bildgebende Mittel bei einer Vergrößerung im Bereich zwischen 10X und 100X eindeutig identifizierbar ist.

8. Markierungsprodukt (14) für Fälschungsschutzzwecke nach einem der vorhergehenden Ansprüche, weiterhin umfassend:
- Mittel zum Verbinden des Markierungsprodukts mit einem Bauteil.

9. Markierungsprodukt (14) für Fälschungsschutzzwecke nach Anspruch 8, wobei das Mittel zum Verbinden des Markierungsprodukts mit einem Bauteil ein Klebeelement (10) in Kontakt mit dem Träger und in Kontakt mit dem einen oder den mehreren Bereichen des Trägers umfasst, auf dem eine oder mehrere Nanofasern gezüchtet wurden.

10. Markierungsprodukt nach einem der vorhergehenden Ansprüche, wobei die eine oder die mehreren Nanofasern Lumineszenzeigenschaften aufweisen.

11. Verfahren zum Herstellen eines Markierungsprodukts nach einem der vorhergehenden Ansprüche, wobei das Verfahren umfasst:
- Züchten von Nanofasern auf einer Fläche eines Trägers in Gegenwart von Mitteln zur Begrenzung des Nanofaserwachstums in einem gewünschten Bereich;
wobei die Mittel zur Begrenzung des Nanofaserwachstums dazu beschaffen sind, mindestens ein Teilwachstum in Bereichen der Fläche des Trägers an einer Grenze zu den Mitteln und/oder unterhalb der Mittel zur Begrenzung des Nanofaserwachstums zu ermöglichen.

12. Verfahren nach Anspruch 11, weiterhin umfassend:
- Entfernen der Mittel zum Begrenzen des Nanofaserwachstums, wodurch in Bereichen der Fläche des Trägers an der Grenze zu den Mitteln und/oder unterhalb der Mittel zur Begrenzung des Nanofaserwachstums gezüchtete Nanofasern freigelegt werden;
- Identifizieren des Nanofaserwachstums an der Grenze zu den Mitteln und/oder unterhalb der Mittel zur Begrenzung des Nanofaserwachstums mittels bildgebender Mittel.

13. Verfahren nach Anspruch 12, weiterhin umfassend:
- Extrahieren von Bilddaten von Bildern des Nanofaserwachstums innerhalb des Grenzbereichs.

14. Verfahren nach einem der vorhergehenden Ansprüche 11-13, weiterhin umfassend:
- Entfernen der Nanofasern durch Spalten mindestens eines Teils der Fläche des Trägers.

15. Verfahren zum Markieren eines Bauteils für Fälschungsschutzzwecke, wobei das Verfahren umfasst:
- Bereitstellen mindestens eines Markierungsprodukts nach einem der Ansprüche 1-10;
- Erstellen einer Datenbank mit aus den Markierungsprodukten extrahierten Bilddaten
- Anbringen der Markierungsprodukte an Bauteile;
- Identifizieren der Bauteile durch Vergleich der Bilddaten aus der Datenbank mit Bilddaten der auf den Bauteilen vorhandenen Markierungen.

## Revendications

1. Produit pour étiquette (14) pour lutter contre la contrefaçon comprenant :
- un substrat (2) ;
- une ou plusieurs nanofibres cultivées sur une ou plusieurs zones dudit substrat,
dans lequel lesdites une ou plusieurs zones comprennent au moins une zone (22) où des nanofibres sont présentes en moins grande concentration que dans d'autres zones (12), et
dans lequel au moins une limite, entre ladite au moins une zone (22) où des nanofibres sont présentes en moins grande concentration que dans d'autres zones et lesdites autres zones (12), délimite une identification macroscopique et une identification nanoscopique dudit produit pour étiquette, dans lequel ladite au moins une limite définit ladite identification macroscopique dudit produit pour étiquette, et lesdites nanofibres cultivées au niveau de ladite au moins une limite définissent ladite identification nanoscopique dudit produit pour étiquette.

2. Produit pour étiquette (14) pour lutter contre la contrefaçon selon la revendication 1, dans lequel ladite au moins une limite est clairement identifiable par des moyens d'imagerie.

3. Produit pour étiquette (14) pour lutter contre la contrefaçon selon la revendication 2, dans lequel ladite limite est clairement identifiable par microscopie.

4. Produit pour étiquette (14) pour lutter contre la contrefaçon selon les revendications 2 à 3, dans lequel ladite limite est clairement identifiable par des moyens d'imagerie étant capables de produire une image optique de la zone limite sur ledit substrat entre ladite au moins une zone (22) où des nanofibres sont présentes en moins grande concentration que dans d'autres zones et lesdites autres zones (12).

5. Produit pour étiquette (14) pour lutter contre la contrefaçon selon la revendication 4, dans lequel ladite zone limite se trouve à 150-250 µm de ladite au moins une limite en direction de ladite au moins une zone (22) où des nanofibres sont présentes en moins grande concentration que dans d'autres zones.

6. Produit pour étiquette (14) pour lutter contre la contrefaçon selon les revendications 4 à 5, dans lequel ladite zone limite se trouve entre 250 µm de ladite au moins une limite dans ladite au moins une zone (22) où des nanofibres sont présentes en moins grande concentration que dans d'autres zones, et 250 µm de ladite au moins une limite dans lesdites autres zones (12).

7. Produit pour étiquette (14) pour lutter contre la contrefaçon selon l'une quelconque des revendications précédentes, dans lequel ladite limite est clairement identifiable par des moyens d'imagerie à un grossissement situé dans la plage de 10X à 100X.

8. Produit pour étiquette (14) selon l'une quelconque des revendications précédentes comprenant également :
- un moyen pour lier ledit produit pour étiquette à un composant.

9. Produit pour étiquette (14) selon la revendication 8, dans lequel ledit moyen pour lier ledit produit pour étiquette à un composant comprend un composant adhésif (10) en contact avec ledit support et en contact avec lesdites une ou plusieurs zones dudit substrat où une ou plusieurs nanofibres ont été cultivées.

10. Produit pour étiquette (14) selon l'une quelconque des revendications précédentes, dans lequel lesdites une ou plusieurs nanofibres possèdent des propriétés luminescentes.

11. Procédé de production d'un produit pour étiquette selon l'une quelconque des revendications précédentes, le procédé comprenant :
- la culture de nanofibres sur une surface d'un substrat en présence d'un moyen pour confiner la culture des nanofibres dans une zone souhaitée,
dans lequel ledit moyen pour confiner la culture des nanofibres est adapté pour permettre au moins une culture partielle sur des zones de ladite surface dudit substrat au niveau d'une limite avec et/ou sous ledit moyen pour confiner la culture des nanofibres.

12. Le procédé selon la revendication 11 comprenant également :
- le retrait dudit moyen pour confiner la culture des nanofibres, en exposant ainsi lesdites nanofibres cultivées sur des zones de ladite surface dudit substrat au niveau de la limite avec et/ou sous ledit moyen pour confiner la culture des nanofibres ;
- l'identification par des moyens d'imagerie de ladite culture des nanofibres au niveau de la limite avec et/ou sous ledit moyen pour confiner la culture des nanofibres.

13. Le procédé selon la revendication 12 comprenant également :
- l'extraction de données d'images à partir d'images desdites nanofibres cultivées dans ladite zone limite.

14. Le procédé selon l'une quelconque des revendications 11 à 13 comprenant également :
- le retrait desdites nanofibres par clivage d'au moins une partie de ladite surface dudit substrat.

15. Procédé d'étiquetage d'un composant pour lutter contre la contrefaçon, le procédé comprenant :
- l'apport d'au moins un produit pour étiquette selon l'une quelconque des revendications 1 à 10 ;
- la production d'une base de données d'images extraites desdits produits pour étiquette ;
- l'application desdits produits pour étiquette sur des composants ;
- l'identification desdits composants en comparant lesdites données d'images provenant de ladite base de données avec des données d'images provenant d'étiquettes présentes sur lesdits composants.
